# EUROPEAN PATENT SPECIFICATION

(11) **EP 0 354 044 B1**
(45) Date of publication and mention of the grant of the patent: **12.05.1993**
(21) Application number: 89307919.4
(22) Date of filing: 03.08.1989
(51) Int. Cl.: G01G 19/42

(54) **Counting continuously supplied articles**
Zählen von kontinuierlich zugeführten Gegenständen
Comptage d'objets alimentés en continu

(30) Priority: 04.08.1988 GB 8818511
(43) Date of publication of application: 07.02.1990
(73) Proprietor: Kirby, John, Middleton Lancashire M24 4EB (GB)
(72) Inventor: Kirby, John, Middleton Lancashire M24 4EB (GB)
(74) Representative: McNeight, David Leslie

(56) References cited:
- EP-A- 0 091 274
- EP-A- 0 124 976
- GB-A- 2 155 190

## Description

This invention relates to counting articles such for example as tablets dispensed by pharmacists.

It is known to count articles by weighing and dividing the weight by a nominal article weight. The dividend, which will usually involve an extraneous fraction, is rounded off to a whole number, since it is usually inconsistent to speak of a fraction of an article especially in the case of tablets.

However, since article weights, and particularly tablet weights, can vary significantly from their nominal weight, this weighing method can give erroneous count values. For example, if tablets having a nominal weight of one gram could have actual weights between 0.9 and 1.1 grams, the count as calculated from weighing out 100 grams would be 100 but in actuality the number could by anything between 91 and 111.

Such an error could be both economically and pharmaceutically unacceptable.

This problem is addressed in EP-A1-0 124 976, which provides a weighing method and apparatus which successively weighs small groups of items so that the number of items in the group must have a stable net weight equal to or below a preset threshold weight before a calculation of the count can be made. When the stable net weight is equal to or below the threshold weight, the net weight is divided by a representative unit weight and the total count of the incremental group is added to the prior group counts to provide a running total of an unknown quantity of items. When the stable net weight is greater than the preset threshold weight, items must be removed from the weighing system to lower the net weight so as to be equal to or below the threshold weight before a count can be made.

However, the method is slow because of the need to interrupt the weighing operation between each batch and, if necessary, adjust the weight by removing excess items before the count can proceed.

The present invention provides a method and apparatus by which counting by weight can be carried out to an absolute or at least acceptable standard of accuracy and continuously at high speed.

The invention comprises a method for counting articles having a nominal weight by weighing the articles and dividing the weight by the nominal weight to yield the number of articles weighed, characterised in that a batch size is determined in relation to the statistical distribution of the weights of the article such that the weight of any batch of that size can be divided by the nominal weight and the dividend be rounded off to the exact number of articles weighed, the articles are supplied continuously and every time a batch weight of a batch of the determined size is attained, a weight signal is re-zeroed and the batch size calculated by division by the nominal weight and rounding off and the thus calculated batch size added to a total.

The batch size may be less than half the nominal weight divided by the maximum error in weight of the articles.

In this latter way, the error per weighed batch will be less than half the nominal weight of an article. Rounding off, therefore, will, unless anything has gone grossly wrong, give the precise number of articles.

The following batch of articles will be treated in the same way and the operation will result in another exact count. And so on for successive batches. Accordingly, no matter how many tablets or other articles have to be counted in total, the result will always be exactly correct.

This result will have been achieved without any improvement in the accuracy of weighing (which also, of course, has to be taken into account in ascertaining the error in the weight of articles, as compared to the nominal weight). Such improvement might be expensively obtained, but would not be accompanied by a corresponding improvement in the count accuracy which, after a point, would be mainly if not entirely dependent upon the accuracy to which nominal weight is held in the articles themselves, when the counting is done conventionally by weighing a total batch without regard to the possibilities of error due to the statistical spread of actual article weights.

The reduction in size of batch need not result in the number count being exact - it may well be that there is a tolerance of say 1% or 2% in the actual number count. Such a result could be achieved by using larger batches than would result in an exact count. Indeed, taking into account the probability that the actual weight distribution will be normal about the nominal (which, of course, cannot necessarily be assumed) the batches could be substantially larger than is necessary on the assumption that absolute accuracy is required even of a batch where every article has the maximum weight error in the same direction, i.e. all the articles are the heaviest possible, or the lightest.

Depending upon the actual weight distribution, different batch sizing rules will give more or less accurate counts. It is, according to the invention, quite possible to bring about any desired degree of improvement over a single weighing of a total batch, by selecting the batch size for the weighing of individual batches, while still maintaining the advantages in terms of speed of batch weighing.

The counting process is not interrupted, rather a weight signal is rezeroed every time a batch weight is attained and the calculated batch size added to a total. This can be effected, electronically, within the time taken to weigh out the next following batch.

The kinetic effect of falling articles could be dealt with by assuming a constant kinetic effect which would have no resultant on consecutive batch weighings, or in the event of irregular article feeding, by a correction factor dependent upon the rate of weight increase.

The invention also comprises apparatus for counting articles having a nominal weight by weighing the articles and dividing the weight by the nominal weight to yield the number of articles weighed, characterised by comprising weighing means capable of being re-zeroed and computing means programmed to divide the weight of a batch of a determined size by the nominal weight to yield the number of the batch by rounding off the dividend and add the number of the batch to a total and re-zero the weighing means each time the determined batch weight increment is weighed during continuous uninterrupted feeding of the articles to be weighed, the batch size being determined in relation to the statistical distribution of the weight of the articles such that the weight of any batch of that size when divided by the nominal weight and rounded off yields the actual number of the batch.

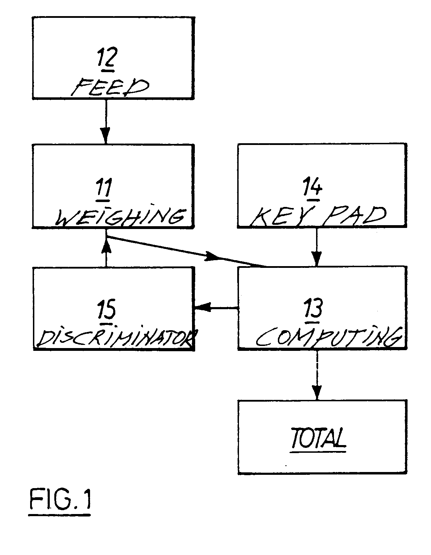

Embodiments of apparatus and methods for counting articles according to the invention will now be described with reference the accompanying drawing, in which Figure 1 is a diagrammatic illustration of one embodiment of apparatus.

The apparatus illustrated in Figure 1 is for counting articles having a nominal weight by weighing the articles and dividing the weight by the nominal weight to yield the number of articles weighed.

The apparatus comprises weighing means 11 of any suitable type weighing the articles in batches. The weighing means 11 are supplied with articles by a feed means 12 which may be a hopper with a chute.

The apparatus also comprises computing means 13 adapted to divide the batch weights input from the weighing means 11, which may be in the form, for example, of digitised batch weights.

Input means, e.g. keyboard or keypad means 14, can be used to input to the computing means 13 the nominal and batch weights of the articles.

A discriminator 15 can, on equalisation of the digitised batch weight with the keyboard input desired batch weight, actuate the computing means 13 to take the momentary batch weight, divide it by the nominal weight and round off the resulting dividend.

Provided the maximum batch weight error, due to differences in the weight of the articles from the nominal, is less than half the weight of a single article, then rounding off the dividend will give an accurate number count for the articles in the batch.

Even if the batch is bigger than that which gives rise to the situation just described, it may still represent a very useful number count, the accuracy of which can be derived from statistical consideration.

The batch count thus computed is added to the total batch count for the counting operation, which, because each sub-total added is precise (or at least, if larger, but still acceptably small, batches are used, acceptably accurate) is itself accurate (or at least acceptably accurate).

The feed from the hopper or the feed means 12 is not interrupted. Rather, when the weighing means registers the nominal weight the value of that weight is "frozen" while the weighing apparatus itself continues to function having been meanwhile, however, rezeroed.

## Claims

1. A method for counting articles having a nominal weight by weighing the articles and dividing the weight by the nominal weight to yield the number of articles weighed, characterised in that a batch size is determined in relation to the statistical distribution of the weights of the article such that the weight of any batch of that size can be divided by the nominal weight and the dividend be rounded off to the exact number of articles weighed, the articles are supplied continuously and every time a batch weight of a batch of the determined size is attained, a weight signal is re-zeroed and the batch size calculated by division by the nominal weight and rounding off and the thus calculated batch size added to a total.

2. A method according to claim 1, characterised in that the batch size is less than half the nominal weight divided by the maximum error in weight of the articles.

3. A method according to claim 1 and claim 2, characterised by being used for counting tablets.

4. Apparatus for counting articles having a nominal weight by weighing the articles and dividing the weight by the nominal weight to yield the number of articles weighed, characterised by comprising weighing means (11) capable of being re-zeroed and computing means (13) programmed to divide the weight of a batch of a determined size by the nominal weight to yield the number of the batch by rounding off the dividend and add the number of the batch to a total and re-zero the weighing means each time the determined batch weight increment is weighed during continuous uninterrupted feeding of the articles to be weighed, the batch size being determined in relation to the statistical distribution of the weight of the articles such that the weight of any batch of that size when divided by the nominal weight and rounded off yields the actual number of the batch.

## Patentansprüche

1. Verfahren zum Zählen von Gegenständen mit einem Nenngewicht durch Wiegen der Gegenstände und Teilen des Gewichts durch das Nenngewicht, um die Anzahl der gewogenen Gegenstände zu erhalten,
**dadurch gekennzeichnet**,
daß eine Gruppengröße in Beziehung auf die statistische Verteilung der Gewichte des Gegenstands bestimmt wird, derart, daß das Gewicht jeder Gruppe dieser Größe durch das Nenngewicht geteilt und der Dividend auf die genaue Anzahl von gewogenen Gegenständen auf/abgerundet werden kann, daß die Gegenstände kontinuierlich zugeführt werden und daß zu jeder Zeit, zu der ein Gruppengewicht einer Gruppe der bestimmten Größe erhalten wird, ein Gewichtssignal auf null zurückgestellt und die Gruppengröße durch Teilen durch das Nenngewicht und Auf/Abrunden berechnet werden, und daß die so berechnete Gruppengröße zu einer Gesamtgröße addiert wird.

2. Verfahren nach Anspruch 1, dadurch gekennzeichnet, daß die Gruppengröße geringer ist als die Hälfte des Nenngewichts geteilt durch den maximalen Fehler im Gewicht der Gegenstände.

3. Verfahren nach Anspruch 1 und Anspruch 2, gekennzeichnet durch die Verwendung zum Zählen von Tabletten.

4. Gerät zum Zählen von Gegenständen mit einem Nenngewicht durch Wiegen der Gegenstände und Teilen des Gewichts durch das Nenngewicht, um die Anzahl der gewogenen Gegenstände zu erhalten,
**gekennzeichnet durch**
Wiegemittel (11), die in der Lage sind, auf null zurückgesetzt zu werden, und durch Rechenmittel (13), die programmiert sind zum Teilen des Gewichts einer Gruppe von einer bestimmten Größe durch das Nenngewicht, um die Anzahl der Gruppe durch Auf/Abrunden des Dividenden zu erhalten, und zum Addieren der Anzahl der Gruppe zu einem Gesamtwert, und zum Zurücksetzen der Wiegemittel auf null jedesmal, wenn der bestimmte Gruppengewichtszuwachs gewogen wird während der kontinuierlichen ununterbrochenen Zuführung der zu wiegenden Gegenstände, wobei die Gruppengröße bestimmt wird in Beziehung zu der statistischen Verteilung des Gewichts der Gegenstände, derart, daß das Gewicht irgendeiner Gruppe dieser Größe, wenn es durch das Nenngewicht geteilt und auf/abgerundet wird, die tatsächliche Anzahl der Gruppe ergibt.

## Revendications

1. Procédé de comptage d'articles ayant un poids nominal par pesage des articles et division du poids par le poids nominal afin d'obtenir le nombre d'articles pesés, caractérisé en ce qu'une taille de lot est déterminée par rapport à la distribution statistique des poids de l'article de telle sorte que le poids d'un lot quelconque de cette taille peut être divisé par le poids nominal et le dividende peut être arrondi au nombre exact d'articles pesés, les articles sont amenés en continu et chaque fois qu'un poids de lot d'un lot de la taille déterminée est atteint, un signal de poids est remis à zéro et la taille de lot calculée par division par le poids nominal et arrondissement et la taille de lot ainsi calculée est ajoutée à un total.

2. Procédé selon la revendication 1, caractérisé en ce que la taille de lot est inférieure à la moitié du poids nominal divisé par l'erreur maximum en poids des articles.

3. Procédé selon la revendication 1 ou la revendication 2, caractérisé en ce qu'il est utilisé pour compter des tablettes.

4. Appareil destiné à compter des articles ayant un poids nominal par pesage des articles et division du poids par le poids nominal afin d'obtenir le nombre d'articles pesés, caractérisé en ce qu'il comprend des moyens de pesage (11) pouvant être remis à zéro et des moyens de calcul (13) programmés pour diviser le poids d'un lot d'une taille déterminée par le poids nominal afin d'obtenir le nombre du lot en arrondissant le dividende et pour ajouter le nombre du lot à un total et remettre à zéro les moyens de pesage chaque fois que l'incrément de poids de lot prédéterminé est pesé pendant une alimentation ininterrompue continue des articles devant être pesés, la taille de lot étant déterminée par rapport à la distribution statistique du poids des articles de telle sorte que le poids d'un lot quelconque de cette taille lorsqu'il est divisé par le poids nominal et arrondi donne le nombre réel du lot.
